# EUROPEAN PATENT SPECIFICATION

(11) **EP 1 754 658 B1**
(45) Date of publication and mention of the grant of the patent: **04.08.2010**
(21) Application number: 06017267.3
(22) Date of filing: 18.08.2006
(51) Int. Cl.: B62L 3/08, B60T 8/26, B62L 3/02, B60T 8/32, F16D 55/228, B60T 1/06

(54) **Combination brake device for bar-handle vehicle**
Anordnung mit mehreren, miteinander gekoppelten Bremsen für ein Fahrzeug mit Lenkstange
Ensemble avec plusieurs freins accouplés pour un vehicule avec guidon

(30) Priority: 19.08.2005 JP 2005238256
(43) Date of publication of application: 21.02.2007
(60) Divisional application: 10150837.2
(73) Proprietor: NISSIN KOGYO CO., LTD., Ueda-shi, Nagano (JP)
(72) Inventor: Hatakoshi, Genichi c/o Nissin Kogyo Co., Ltd., Ueda-shi, Nagano (JP)
(74) Representative: HOFFMANN EITLE

(56) References cited:
- EP-A- 1 277 635
- JP-A- 4 143 154
- JP-A- 62 026 183
- JP-A- 2002 293 283
- JP-A- 2003 025 978
- JP-A- 2004 231 112
- US-A- 5 363 943

## Description

### BACKGROUND OF THE INVENTION

### 1. Field of the Invention

The present invention relates to a combination brake device for a bar-handle vehicle and, more particularly, to a constitution of a disk brake to be used in the combination brake device.

### 2. Description of the Background Art

A combination brake device for a bar-handle vehicle for braking the front wheels and the rear wheels in an interlocking manner is provided with a first front-wheel disk brake adapted to be hydraulically activated by the actuation of a front-wheel brake operating member, and a second front-wheel disk brake adapted to be hydraulically operated by the action of the front-wheel brake operating member in relation to the action of a rear-wheel brake operating member. In the first front-wheel disk brake, the second front-wheel disk brake and the rear-wheel disk brake to be used in the combination brake device, a four-pot opposed type identical caliper body having two sets cylinder holes formed to confront each other is used to lower the cost (as referred to in Japanese Patent Unexamined Publication JP-A-2004-231112, for example, which discloses a device according to the preamble of claim 1).

In another combination brake device, the diameter of the pistons to be hydraulically activated by the activation of the front-wheel brake operating member and the diameter of the interlocking pistons to be hydraulically activated by the activation of the rear-wheel brake operating member are made different so that the distribution of the braking forces may be adjusted (as referred to Japanese Patent Examined Publication JP-B-5-43556, for example).

In the aforementioned device of Patent Publication 1, pistons of an identical diameter are mounted on the first front-wheel disk brake, the second front-wheel disk brake and the rear-wheel disk brake so that the distribution of the braking force cannot be adjusted.

In the device of Patent Publication 2, on the other hand, the caliper body and the friction pads cannot be shared to make the maintainability and the productivity poor.

### SUMMARY OF THE INVENTION

Therefore, an object of the invention is to provide a combination brake device for a bar-handle vehicle, in which the components of a first front-wheel disk brake and a second front-wheel disk brake are made as common as possible thereby to improve the maintainability and the productivity and to adjust the distribution of braking forces satisfactorily.

In order to achieve the above-specified object, according to a first invention, there is provided a combination brake device for a bar-handle vehicle, comprising the features of claim 1.

In addition to the characteristics of the first invention, according to a second invention, the diameters of the interlocking pistons are smaller than the reference pistons.

In addition to the characteristics of the first or second invention, according to a third invention, a first distance is defined between at least one of a center of a circle of the independent piston and the interlocking piston and a center of a circle of a disk rotor;
a second distance is defined between a center of a circle of the reference piston and the center of the circle of the disk rotor; and
the first distance differs from the second distance.

In addition to the characteristics of any of the first to third inventions, according to a fourth invention, the first front-wheel disk brake and the second front-wheel disk brake are molded by using a common casting die.

In the first to third inventions, the shapes of the friction pads, as used in the first front-wheel disk brake and the second front-wheel disk brake, are shared to improve the maintainability. Moreover, the diameter of the independent pistons and the interlocking pistons of the second front-wheel disk brake are made different from that of the reference pistons. Even if the friction pads have an identical shape and even if the lining materials of the friction pads have an identical friction coefficient, therefore, it is possible to adjust the distribution of the braking force obtained by the actuation of the front-wheel brake operating member and the braking force obtained by the actuation of the rear-wheel brake operating member.

In another embodiment which does not form part of the present invention, on the other hand, the distance from the piston center of the independent pistons and the interlocking pistons to the center of the disk rotors and the distance from the piston center of the reference pistons to the center of the disk rotors are made different from each other. Even if the friction pads have an identical shape and even if the lining materials of the friction pads have an identical friction coefficient, therefore, it is possible to adjust the distribution of the braking force obtained by the actuation of the front-wheel brake operating member and the braking force obtained by the actuation of the rear-wheel brake operating member.

In the fourth invention, moreover, a common casting die can be used for casting the caliper body to be used for the first front-wheel disk brake and for the second front-wheel disk brake so that the productivity can be improved. For the independent pistons, the reference pistons and the interlocking pistons of an identical diameter, moreover, cutting tools or the like to be used for working the cylinder bores in the caliper bodies can be shared to lower the manufacturing cost.

### BRIEF DESCRIPTION OF THE DRAWINGS

Fig. 1 is a system diagram of a combination brake device for a bar-handle vehicle according to a first embodiment of the invention;
Fig. 2 is a sectional front elevation of a first front-wheel disk brake of the same;
Fig. 3 is a sectional front elevation of a second front-wheel disk brake of the same; and
Fig. 4 is a sectional front elevation showing a second front-wheel disk brake according to a second embodiment which does not form part of the invention.

### DETAILED DESCRIPTION OF THE PREFERRED EMBODIMENTS

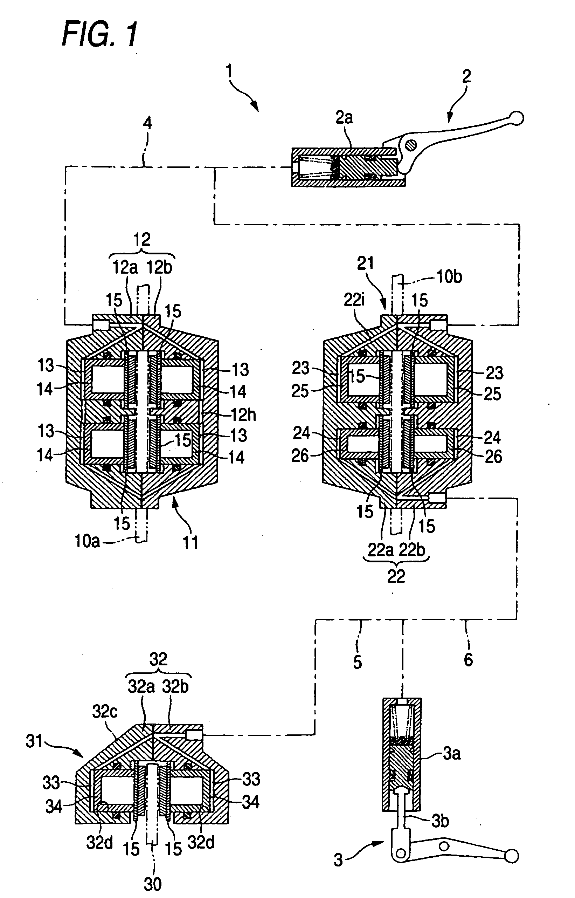

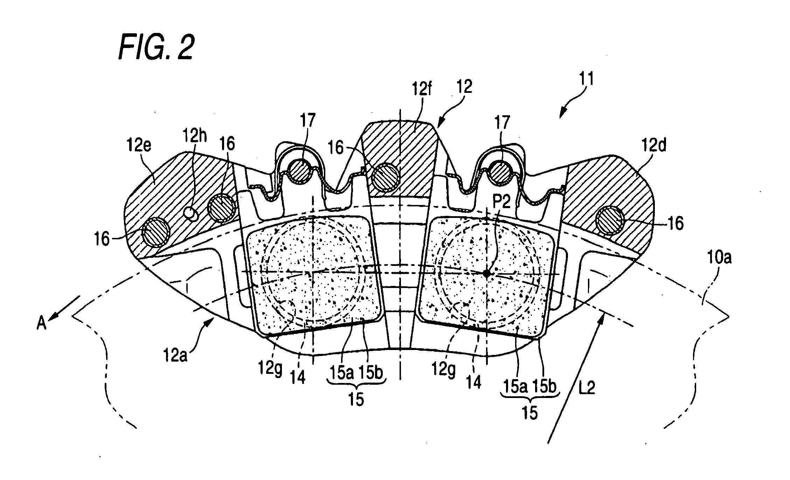

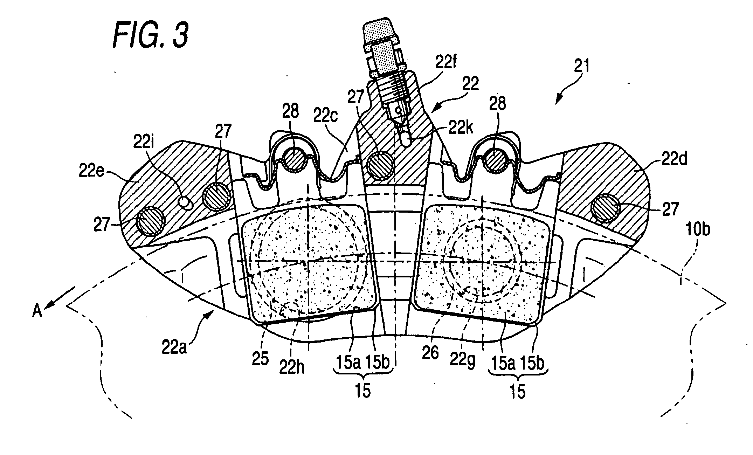

The individual embodiments of the invention are described in detail in the following with reference to the accompanying drawings. Of Figs. 1 to 3 showing a first embodiment of the invention: Fig. 1 is a system diagram of a combination brake device for a bar-handle vehicle; Fig. 2 is a sectional front elevation of a first front-wheel disk brake; and Fig. 3 is a sectional front elevation of a second front-wheel disk brake. Here, arrows A in the drawings indicate the direction of rotation of a disk rotor at the forward running time of the vehicle, and the input-side and output-side of the disk brake to be described hereinafter are set to those of the forward running time of the vehicle.

As shown in Fig. 1, a combination brake device for a bar-handle vehicle 1 is provided, as a front-wheel brake, with two diametrically identical disk rotors 10a and 10b, and a first front-wheel disk brake 11 and a second front-wheel disk brake 21 of dual-pot opposed type arranged on the disk rotors 10a and 10b, respectively, and, as a rear-wheel brake, with one disk rotor 30 and a single-pot opposed type rear-wheel disk brake 31. The first front-wheel disk brake 11 is of the one-line type, in which four hydraulic-pressure chambers 13 formed in a caliper body 12 are all made to communicate. The second front-wheel disk brake 21 is of the two-line type, in which front and rear hydraulic-pressure chambers are made different by providing communications between hydraulic-pressure chambers 23 and 23 on the disk output side and hydraulic-pressure chambers 24 and 24 on the disk input side of the four hydraulic-pressure chambers formed in a caliper body 22. On the other hand, the rear-wheel disk brake 31 provides communication between two hydraulic-pressure chambers 33 formed in a caliper body 32.

A front-wheel brake operating member 2 is a brake lever, which is hinged to a front-wheel hydraulic-pressure master cylinder 2a disposed on the right end portion of the steering handle. A rear-wheel brake operating member 3 is a brake pedal, which is hinged to the body frame. The rear-wheel brake operating member 3 is provided on its rear end with a piston pusher 3b for actuating a rear-wheel hydraulic-pressure master cylinder 3a. When the front-wheel brake operating member 2 is operated, the hydraulic-pressure for the brake activation is generated in the front-wheel hydraulic-pressure master cylinder 2a. When the rear-wheel brake operating member 3 is operated, the hydraulic-pressure for the brake activation is generated in the rear-wheel hydraulic-pressure master cylinder 3a.

This combination brake device for a bar-handle vehicle 1 comprises: a first front-wheel brake system 4 for feeding the hydraulic-pressure, as generated by the action of the front-wheel brake operating member 2, to the four hydraulic-pressure chambers 13 of the first front-wheel disk brake 11 and to the two hydraulic-pressure chambers 23on the disk output side of the second front-wheel disk brake 21, individually, thereby to actuate a reference piston 14 in each hydraulic-pressure chamber 13 and an independent piston 24 in each hydraulic-pressure chamber 23 hydraulically; a first rear-wheel brake system 5 for feeding the hydraulic-pressure, as generated by the action of the rear-wheel brake operating member 3, to the two hydraulic-pressure chambers 33 of the rear-wheel disk brake 31 thereby to actuate pistons 34 in the two hydraulic-pressure chambers 33 hydraulically; and a second front-wheel brake system 6° for feeding the hydraulic-pressure, as generated by the action of the rear-wheel brake operating member 3, to the two hydraulic-pressure chambers 24 on the disk input side of the second front-wheel disk brake 21 thereby to actuate interlocking pistons 26 in the two hydraulic-pressure chambers 24 hydraulically.

The first front-wheel disk brake 11 is provided, as shown in Fig. 2, with: the disk rotor 10a disposed on the front-wheel; the caliper body 12 mounted on the vehicle body at one side portion of the disk rotor 10a; and four friction pads 15 so arranged in the caliper body 12 as to face each other across the disk rotor 10a. The caliper body 12 is formed by jointing first and second caliper halves 12a and 12b, which are arranged on one side and on the other side of the disk rotor 10a, such that the first caliper half 12a and the second caliper half 12b abut at a bridge portion 12c, and such that a disk input side joint face 12d, a disk output side joint face 12e and an intermediate joint face 12f are fastened by inserting a connecting bolt 16 into those faces 12d, 12e and 12f individually in the disk axis direction.

In the two caliper halves 12a and 12b, there are formed diametrically identical cylinder holes 12g and 12g, in which the diametrically identical reference pistons 14 are individually fitted. Between the bottoms of the hydraulic cylinder holes 12g and the reference piston 14, there are defined the aforementioned hydraulic-pressure chambers 13, the communication of which is provided by a fluid passage 12h. On the front face of each reference piston 14, there is disposed each of the friction pads 15 of the identical shape. Each friction pad 15 has a pushing face having a size suitable for the reference piston 14, and is composed of linings 15a of the same shape and back plates 15b made of a metal in the same shape. The linings 15a are made of an identical material and have an equal friction coefficient. Each of the friction pads 15 is so suspended to move in the axial direction of the disk rotor with its lining 15a directed toward the disk rotor 10a that hanger pins 17 and 17 are individually inserted above the two back plates 15b facing each other through the disk rotor 10a.

The second front-wheel disk brake 21 is provided, as shown in Fig. 3, with: the caliper body 22 mounted on the vehicle body at one side portion of the front-wheel disk rotor 10b; and the four friction pads 15 identical to the friction pads 15 used in the first front-wheel disk brake 11 arranged to face each other across the disk rotor 10b in that caliper body 22. The caliper body 22 is formed by using the casting die, which is common to that for manufacturing the caliper body 12 of the first front-wheel disk brake 11. The caliper body 22 is formed by jointing first and second caliper halves 22a and 22b, which are arranged on one side and on the other side of the disk rotor 10b, such that the first caliper half 22a and the second caliper half 22b abut at a bridge portion 22c, and such that a disk input side joint face 22d, a disk output side joint face 22e and an intermediate joint face 22f are fastened by inserting a connecting bolt 27 into those faces 22d, 22e and 22f individually in the disk axis direction.

In the disk output sides of the two caliper halves 22a and 22b, there are formed cylinder holes 22h, which are diametrically larger than the cylinder holes 12g of the first front-wheel disk brake 11. In the disk input sides, there are formed cylinder holes 22g, which are diametrically smaller than the cylinder holes 12g of the first front-wheel disk brake 11 and which face the cylinder holes 22h individually. The independent pistons 25, which are diametrically larger than the reference pistons 14, are fitted in the diametrically larger cylinder holes 22h, and the interlocking pistons 26, which are diametrically smaller than the reference pistons 14, are fitted in the diametrically smaller cylinder holes 22g. Moreover, the hydraulic-pressure chambers 23 and 23 on the disk output side communicate through a communication passage 22i, and hydraulic-pressure chambers 24 and 24 on the disk input side communicate through a communication passage 22k.

Each of the pistons 25 and 26 is provided on its front face with one sheet of the friction pads 15, which are suspended movably in the disk axis direction by hunger pins 28 and 28.

The rear-wheel disk brake 31 is the well-known single-pot opposed type disk brake, and is provided with the caliper body 32 mounted on the vehicle body at one side portion of the disk rotor 30 of the rear wheel, and the two friction pads 15 so arranged in the caliper body 32 as to face each other across the disk rotor 30. The caliper body 32 is formed by holding a first caliper half 32a arranged on one side face of the disk rotor 30 and a second caliper half 32b arranged on the other side face of the disk rotor 30 such that they face each other, and by fastening the caliper halves 32a and 32b through the (not-shown) connecting bolt. The pistons 34 having the same diameter as that of the reference pistons 14 are individually inserted into cylinder holes 32d which are formed in the two caliper halves 32a and 32b and which have diameters equal to those of the cylinder holes 12g of the first front-wheel disk brake 11. Between the bottoms of the individual cylinder holes 32d and the individual pistons 34, there are individually defined the two hydraulic-pressure chambers 33, which communicate with each other via a fluid passage 32e. From the front faces of the individual pistons 34, on the other hand, there are so suspended the two friction pads 15 which have the shape identical to that of the friction pads 15 used in the first front-wheel disk brake 11, that they can move in the disk axis direction.

In the combination brake device for a bar-handle vehicle 1 thus constituted, when the front-wheel brake operating member 2 is activated, the working fluid is fed through the first front-wheel brake system 4 to the four hydraulic-pressure chambers 13 of the first front-wheel disk brake 11 and to the two hydraulic-pressure chambers 23 on the disk output side of the second front-wheel disk brake 21, so that the four reference pistons 14 of the first front-wheel disk brake 11 and the two independent pistons 25 of the second front-wheel disk brake 21 are individually activated to bring the friction pads 15 of the same shape, as arranged in front of the individual pistons 14 and 25, into sliding contact with the side faces of the disk rotors 10a and 10b. At this time, the independent pistons 25 are made diametrically larger than the reference pistons 14 so that the pushing force form the independent pistons 25 to push the friction pads 15 onto the disk rotors 10b can be set higher than the pushing force for the reference pistons 14 to push the friction pads 15 onto the disk rotors 10b thereby to adjust the distribution of the braking forces of the two front-wheel disk brakes 11 and 21 in a well-balanced manner.

When the rear-wheel brake operating member 3 is activated, on the other hand, the working fluid is fed through the first rear-wheel brake system 5 to the two hydraulic-pressure chambers 33 of the rear-wheel disk brake 31, so that the individual pistons 34 are operated to bring the friction pads 15 into sliding contacts with the rear-wheel disk rotor 30. Simultaneously with this, the working fluid is fed through the second front-wheel brake system 6 to the two hydraulic-pressure chambers 24 of the disk input side of the second front-wheel disk brake 21, so that the two interlocking pistons 26 are operated to bring the friction pads 15 into sliding contact with the disk rotors 10b of the front wheels. At this time, the interlocking pistons 26 of the second front-wheel disk brake 21 are made diametrically smaller than the two pistons 34 of the front-wheel disk brake 31, so that the braking force of the interlocking pistons 26 of the second front-wheel disk brake 21 can be set so low as to activate the rear-wheel disk brake 31 and the second front-wheel disk brake 21 in a well-balance interlocking manner.

Moreover, the first front-wheel disk brake 11, the second front-wheel disk brake 21 and the rear-wheel disk brake 31 use the friction pads 15 of the same shape. Even if the friction pads 15 have their worn states due to the difference in the diameters of the individual pistons 14, 24, 26 and 34, it is possible replace only the severely worn friction pads 15 exclusively. Since the friction pads 15 used are made common, moreover, the maintainability can be improved without any fear of mistaken assembly. Moreover, the caliper bodies 12 and 22 used in the first front-wheel disk brake 11 and the second front-wheel disk brake 21 can be molded by means of a common casting die so that their productivities can be improved.

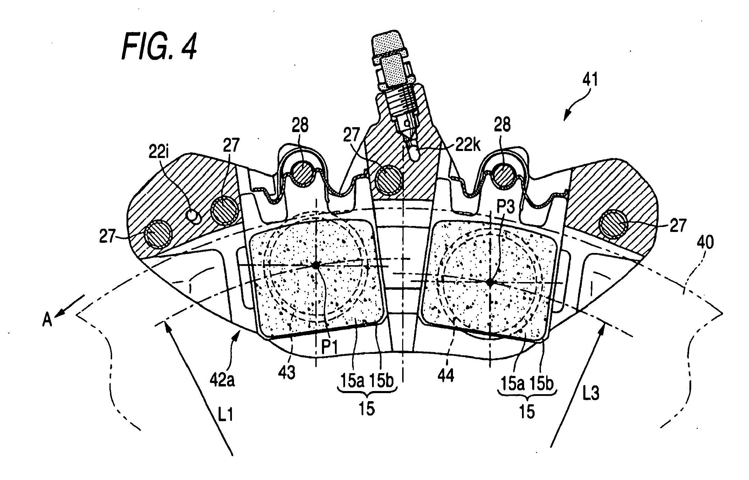

Fig. 4 is a sectional front elevation of a second front-wheel disk brake and shows a second embodiment which does not form part of the invention. The members common to those of the first embodiment are omitted in their detailed description by designating them by the common reference numerals. Moreover, the first front-wheel disk brake used is similar to that shown in Fig. 2.

In a second front-wheel disk brake 41 of this embodiment, an independent piston 43 and an interlocking piston 44, as mounted in a caliper half 42a, are formed to have the same diameter as that of the reference pistons 14. The independent piston 43 is formed at such a position that the distance L1 from the piston center P1 of the independent piston 43 to the center of a disk rotor 40 is longer than the distance L2 from the piston center P2 of the reference piston 14 to the center of the disk rotor 10a. On the other hand, the interlocking piston 44 is formed at such a position that the distance L3 from the piston center P3 of the interlocking piston 44 to the center of the disk rotor 40 is shorter than the aforementioned distance L2. On the front faces of the independent pistons 43 and the interlocking pistons 44, moreover, there are individually arranged the friction pads 15 which are identical to the friction pads 15 used in the aforementioned first front-wheel disk brake 11.

In this embodiment, the distance L1 from the piston center P1 of the independent piston 43 to the center of the disk rotor 40 is made longer than the distance L2 from the piston center P2 of the reference piston 14 to the center of the disk rotor 10a, so that the braking force of the independent piston 43 can be set higher than that of the reference piston 14 thereby to adjust the distribution of the braking forces of the two front-wheel disk brakes 11 and 41 in the well-balanced manner. Moreover, the distance L3 from the piston center P3 of the interlocking piston 44 to the center of the disk rotor 40 is set shorter than the distance L2 (as referred to Fig. 2) from the piston center P2 of the reference piston 14 to the center of the disk rotor 10a, so that the braking force of the interlocking piston 44 can be set lower than that of the reference piston 14 thereby to actuate the rear-wheel disk brake 31 and the second front-wheel disk brake system 4 in the well-balanced manner.

In this embodiment, moreover, the independent pistons 43, the interlocking pistons 44 and the reference pistons 14 are made diametrically identical, so that cutting tools to be used for working the cylinder bores in the caliper bodies can be shared to use the common casting die and to lower the manufacturing cost.

Here, the invention should not be limited to the individual embodiments thus far described, but the reference pistons, the independent pistons and the interlocking pistons can be set to have arbitrary diameters, and the distances from the piston centers to the disk rotors can also be suitably set. Moreover, the invention can also be applied to a modification, in which pistons of a plurality of different diameters are used to make the distances different from the centers of the individual pistons to the centers of the disk rotors, so that the distribution of the braking force can be more finely adjusted. For example, the independent pistons are made diametrically larger than the reference pistons, and the interlocking pistons may be made diametrically smaller than the reference pistons. At the same time, the distances from the piston centers of the independent pistons and the interlocking pistons to the centers of the disk brakes may also be made different from the distances from the piston centers of the reference pistons to the centers of the disk brakes thereby to adjust the distribution of the braking forces finely. Moreover, the pistons belonging to the calipers should not be limited to the two sets but may be three sets or more. Still moreover, a caliper body similar to that of the first front-wheel disk brake may also be applied to the caliper body for rear-wheel disk brake.
While there has been described in connection with the preferred embodiments of the present invention, it will be obvious to those skilled in the art that various changes and modification may be made therein without departing from the present invention, and it is aimed, therefore, to cover in the appended claim all such changes and modifications as fall within the scope of the present invention.

## Claims

1. A combination brake device (1) for a bar-handle vehicle, comprising:
a front-wheel brake operating member (2);
a rear-wheel brake operating member (3);
a first front-wheel disk brake (11) including plural sets of pistons (14) hydraulically operated by the front-wheel brake operating member (2);
a second front-wheel disk brake (21) including:
at least one set of independent pistons (25) hydraulically operated by the front-wheel brake operating member (2); and
at least one set of interlocking pistons (26) interlockingly and hydraulically operated by the rear-wheel brake operating member (3); and
a rear-wheel disk brake (31) hydraulically actuating at least one set of pistons (34) by an operation of the rear-wheel brake operating member (3),
wherein:
each of the pistons (14) of the first front-wheel disk brake (11), of which diameters are identical to each other, are set as reference pistons (14); and
each of friction pads (15) having identical shape is individually arranged between a disk rotor (10a, 10b) and the reference pistons (14), the independent pistons (25) and the interlocking pistons (26),
**characterized in that**
the diameter of the independent pistons (25) is larger than that of the reference pistons (14).

2. The combination brake device for the bar-handle vehicle as set forth in claim 1, wherein the diameters of the interlocking pistons (26) are smaller that those of the reference pistons (14).

3. The combination brake device for the bar-handle vehicle as set forth in claim 1 or 2, wherein
a first distance (L1, L3) is defined between at least one of a center (P1, P3) of a circle of the independent piston (25) and the interlocking piston (26) and a center of a circle of the disk rotor (10b);
a second distance (L2) is defined between a center (P2) of a circle of the reference piston (14) and the center of the circle of the disk rotor (10a); and
the first distance (L1, L3) differs from the second distance (12).

4. The combination brake device for the bar-handle vehicle as set forth in any one of claims 1 to 3, wherein the first front-wheel disk brake (11) and the second front-wheel disk brake (21, 41) are molded by using a common casting die.

## Patentansprüche

1. Kombinationsbremseinrichtung (1) für ein Lenkstangenfahrzeug, umfassend:
ein vorderes Radbremsbetriebselement (2);
ein hinteres Radbremsbetriebselement (3);
eine erste Vorderradscheibenbremse (11), umfassend eine Vielzahl an Kolbensätzen (14), die hydraulisch durch das vordere Radbremsbetriebselement (2) betrieben werden;
eine zweite Vorderradscheibenbremse (21), umfassend:
zumindest einen Satz von unabhängigen Kolben (25), die hydraulisch durch das Vorderradbremsbetriebselement (2) betrieben werden; und
zumindest einen Satz von Sperrkolben (26), die gesperrt und hydraulisch durch das Hinterradbremsbetriebselement (3) betrieben werden; und
eine Hinterradscheibenbremse (31), die hydraulisch zumindest einem Satz der Kolben (34) durch einen Betrieb des Hinterradbremsbetriebselements (3) betätigt,
bei der:
jeder der Kolben (14) der ersten Vorderradscheibenbremse (11), deren Durchmesser zueinander identisch sind, als Referenzkolben (14) festgelegt ist; und
jedes der Reibpolster (15), die eine identische Gestalt aufweisen, individuell zwischen einem Scheibenrotor (10a, 10b) und den Referenzkolben (14), den unabhängigen Kolben (25) und den Sperrkolben (26) angeordnet ist,
**dadurch gekennzeichnet, dass**
der Durchmesser der unabhängigen Kolben (25) größer als der der Referenzkolben (14) ist.

2. Kombinationsbremseinrichtung für ein Lenkstangenfahrzeug nach Anspruch 1, bei dem die Durchmesser der Sperrkolben (26) geringer als die der Referenzkolben (14) sind.

3. Kombinationsbremseinrichtung für ein Lenkstangenfahrzeug nach Anspruch 1 oder 2, bei dem
eine erste Entfernung (L1, L3) zwischen zumindest einem Zentrum (P1, P3) eines Kreises des unabhängigen Kolbens (25) und des Sperrkolbens (26) und einem Zentrum eines Kreises des Scheibenrotors (lOb) definiert ist;
eine zweite Entfernung (L2) zwischen einem Zentrum (P2) eines Kreises des Referenzkolbens (14) und dem Zentrum des Kreises des Scheibenrotors (10a) definiert ist; und
die erste Entfernung (L1, L3) sich von der zweiten Entfernung (L2) unterscheidet.

4. Kombinationsbremseinrichtung für das Lenkstangenfahrzeug nach einem der Ansprüche 1 bis 3, bei dem die erste Vorderradscheibenbremse (11) und die zweite Vorderradscheibenbremse (21, 41) durch Verwenden eines gewöhnlichen Gusswerkzeugs ausgeformt sind.

## Revendications

1. Dispositif de freinage combiné (1) pour un véhicule à guidon, comprenant :
un élément d'actionnement de frein de roue avant (2) ;
un élément d'actionnement de frein de roue arrière (3) ;
un premier frein à disque de roue avant (11) incluant plusieurs séries de pistons (14) actionnés hydrauliquement par l'élément d'actionnement de frein de roue avant (2) ;
un second frein à disque de roue avant (21) incluant :
au moins une série de pistons indépendants (25) actionnés hydrauliquement par l'élément d'actionnement de frein de roue avant (2) ; et
au moins une série de pistons de couplage (26) actionnés hydrauliquement et de manière couplée par l'élément d'actionnement de frein de roue arrière (3) ; et
un frein à disque de roue arrière (31) actionnant hydrauliquement au moins une série de piston (34) par l'actionnement d'un élément d'actionnement de frein de roue arrière (3)
dans lequel :
chacun des pistons (14) du premier frein à disque de roue avant (11), dont les diamètres sont identiques, sont réglés comme des pistons de référence (14) ; et
chacun des patins de frottement (15) ayant une forme identique est agencé individuellement entre un rotor de disque (10a, 10b) et les pistons (14) de référence, les pistons indépendants (25) et les pistons de couplage (26),
**caractérisé en ce que**
le diamètre des pistons indépendants (25) est supérieur à celui des pistons (14) de référence.

2. Dispositif de freinage combiné pour le véhicule à guidon selon la revendication 1, dans lequel les diamètres des pistons de couplage (26) sont inférieurs à ceux des pistons (14) de référence.

3. Dispositif de freinage combiné pour le véhicule à guidon selon la revendication 1 ou 2, dans lequel
une première distance (L1, L3) est définie entre au moins l'un d'un centre (P1, P3) d'un cercle du piston indépendant (25) et du piston de couplage (26) et un centre d'un cercle du rotor de disque (10b) ;
une seconde distance (L2) est définie entre un centre (P2) d'un cercle du piston de référence (14) et le centre du cercle du rotor de disque (10a) ; et
la première distance (L1, L3) diffère de la seconde distance (12).

4. Dispositif de freinage combiné pour le véhicule à guidon selon l'une quelconque des revendications 1 à 3, dans lequel le premier frein à disque de roue avant (11) et le second frein à disque de roue avant (21, 41) sont moulés en utilisant un matrice de moulage commune.
